# EUROPEAN PATENT APPLICATION

(11) **EP 4 549 867 A1**
(43) Date of publication of application: **07.05.2025**
(21) Application number: 23830368.9
(22) Date of filing: 28.06.2023
(51) Int. Cl.: F28F 1/40

(54) **HARMONICA-SHAPED TUBE, HARMONICA-SHAPED TUBE TYPE HEAT EXCHANGER AND VEHICLE**

(30) Priority: 30.06.2022 CN 202210772676
(71) Applicant: BYD Company Limited, Shenzhen, Guangdong 518118 (CN)
(72) Inventor: CAI, Yaomin, Shenzhen, Guangdong 518118 (CN); ZHONG, Rijun, Shenzhen, Guangdong 518118 (CN); XIAO, Xiaolin, Shenzhen, Guangdong 518118 (CN); PENG, Qingbo, Shenzhen, Guangdong 518118 (CN); ZHOU, Renyi, Shenzhen, Guangdong 518118 (CN)
(74) Representative: Gunzelmann, Rainer
(86) International application number: PCT/CN2023/103476
(87) International publication number: WO 2024/002197

(57) **Abstract**

A harmonica-shaped tube, a harmonica-shaped tube type heat exchanger and a vehicle. The harmonica-shaped tube comprises a plurality of flow channels arranged at intervals, wherein inner walls of at least some flow channels are provided with protrusions protruding in the direction approaching the centers of the flow channels and/or recesses recessed in the direction away from the centers of the flow channels. The protrusions and recesses can enable a liquid fluid (refrigerant) to nucleate rapidly, and can also burst large nucleuses which grow in a disorderly manner, thereby preventing the large nucleuses from forming boundary layers on the inner walls of the flow channels, such that nucleuses can be separated from wall surfaces rapidly. Therefore, the heat exchange performance of the harmonica-shaped tube is improved, and the heat exchange requirements of a traction battery are satisfied.

## Description

### CROSS-REFERENCE TO RELATED APPLICATIONS

The present disclosure claims priority to Chinese Patent Application No. 202210772676.7, filed on June 30,2022, and entitled "HARMONICA-SHAPED TUBE, HARMONICA-SHAPED TUBE TYPE HEAT EXCHANGER AND VEHICLE", which is incorporated herein by reference in its entirety.

### FIELD

The present disclosure relates to the field of battery heat exchanger, and in particular, to a harmonica tube, a harmonica tube heat exchanger and a vehicle.

### BACKGROUND

The power battery direct cooling heat exchanger is mainly formed by welding a harmonica tube, a collecting tube assembly, a tail end collecting tube, a connector and a temperature equalizing plate in the related art. Meanwhile, a flow channel is arranged in the harmonica tube, and the refrigerant mainly performs boiling heat transfer rather than convection heat transfer in the harmonica tube. The inner wall of the flow channel of the harmonica tube is smooth, and the refrigerant enters from one end and flows out from the other end, on the one hand, the contact time between the refrigerant and the inner wall surface is too short, which is not conducive to nucleation; on the other hand, once nucleated, the nucleus always swims along the inner wall surface and cannot be detached from the wall surface rapidly, causing the heat exchange capacity is obviously reduced.

### SUMMARY

The present disclosure is intended to provide a harmonica tube, a harmonica tube heat exchanger and a vehicle, wherein the harmonica tube can improve boiling heat transfer capacity through a protrusion and/or a recess formed on the inner sidewall of a flow channel of the harmonica tube so as to overcome the technical problem of insufficient heat exchange capacity of the conventional harmonica tube.

In order to achieve the above object, in a first aspect of the present disclosure, a harmonica tube includes a plurality of flow channels which are arranged at intervals, wherein at least part of the inner sidewall of the flow channels is provided with a protrusion protruding towards near the center direction of the flow channels and/or provided with a recess recessed towards the center direction away from the flow channels.

In an embodiment, the protrusion is formed on the inner sidewall of the flow channel and penetrates through the flow channel along the length direction of the flow channel;
or the protrusion is spirally arranged along the length direction of the flow channel;
or the number of the protrusions is plural, and the plurality of the protrusions are arranged at intervals along the length direction of the flow channel.

In an embodiment, the recess is formed on the inner sidewall of the flow channel and penetrates through the flow channel along the length direction of the flow channel;
or the recess is spirally arranged along the length direction of the flow channel;
or the number of the recesses is plural, and the plurality of the recesses are arranged at intervals along the length direction of the flow channel.

In an embodiment, the number of the protrusions is plural, the plurality of protrusions extend along the length direction of the flow channel and are arranged at intervals along the circumferential direction of the flow channel;
or the number of the recesses is plural, and the plurality of recesses extend along the length direction of the flow channel and are arranged at intervals along the circumferential direction of the flow channel.

In an embodiment, the number of the protrusions is two, and the two protrusions are arranged on two opposite side surfaces of the flow channel.

In a second aspect of the present disclosure, a harmonica tube heat exchanger is provided, which includes a collecting tube assembly, a tail end collecting tube, a connector, a temperature equalizing plate, and a plurality of the foregoing harmonica tubes;
wherein the collecting tube assembly includes a first collecting tube and a second collecting tube; the inlet of the connector is in communication with the first end of a portion of the plurality of the harmonica tubes through the first collecting tube, and the outlet of the connector is in communication with the first end of another portion of the plurality of the harmonica tubes through the second collecting tube. The second ends of the plurality of the harmonica tubes are respectively in communication with the tail end collecting tube;
and the plurality of the harmonica tubes are fixedly arranged on the temperature equalizing plate.

In an embodiment, in a direction perpendicular to the extension direction of the harmonica tubes, at least two of the harmonica tubes positioned on the outermost side among the plurality of harmonica tubes communicate with the first collecting tube.

In an embodiment, the number of the harmonica tubes is eight, in a direction perpendicular to the extension direction of the harmonica tubes, the first ends of the four harmonica tubes on the innermost side are respectively in communication with the second collecting tube, and the first ends of the other four harmonica tubes are in communication with the first collecting tube.

In an embodiment, the first collecting tube is provided with a plurality of first strip-shaped holes extending along the length direction of the first collecting tube, and the first end of the harmonica tube is fixedly connected with the first strip-shaped holes, causing a plurality of flow channels of the harmonica tube can be in communication with the first collecting tube;
and/or the second collecting tube is provided with a plurality of second strip-shaped holes extending along the length direction of the second collecting tube, and the first end of the harmonica tube is fixedly connected with the second strip-shaped holes, causing a plurality of flow channels of the harmonica tube can be in communication with the second collecting tube;
and/or the tail end collecting tube is provided with a plurality of third strip-shaped holes extending along the length direction of the tail end collecting tube, and the second end of the harmonica tube is fixedly connected with the third strip-shaped holes, causing a plurality of flow channels of the harmonica tube can be in communication with the tail end collecting tube.

In a third aspect of the present disclosure, a vehicle including power battery is also provided, the vehicle further includes the foregoing harmonica tube heat exchanger.

Through the technical scheme, that is, the harmonica tube of the present disclosure, the protrusion and/or the recess is/are arranged on the inner sidewalls of the plurality of flow channels or a portion of the plurality of the flow channels, and the protrusion and the recess can be used as gasification core, causing the liquid fluid (refrigerant) can be quickly nucleated and vaporized, meanwhile, they can also break the disordered growth of large nuclei (bubbles) after nucleation, causing them to quickly detach from the wall of the flow channel, preventing the formation of a boundary layer on the inner sidewall surface of the flow channel by the nucleated large nuclei (bubbles), improving the heat transfer capacity of the harmonica tube, and meeting the heat transfer needs of power battery.

The additional aspects and advantages of the present disclosure will be described in detail in the following detailed descriptions.

### BRIEF DESCRIPTION OF THE DRAWINGS

The drawings, which are included to provide a further understanding of the present disclosure and constitute a part of the description, together with the following detailed description, are used to explain the present disclosure and do not constitute an undue limitation of the present disclosure. In the drawings:
FIG. 1 is a schematic structural diagram of a harmonica tube of a conventional power battery direct cooling heat exchanger;
FIG. 2 is a schematic structural diagram of a harmonica tube provided by some embodiments of the present disclosure;
FIG. 3 is an enlarged view of part A in fig. 2;
FIG. 4 is a partial enlarged view of the a flow channel cross-section of a harmonica tube provided in other embodiments of the present disclosure;
FIG. 5 is a schematic structural diagram of a harmonica tube heat exchanger provided by some embodiments of the present disclosure;
FIG. 6 is an exploded view of the harmonica tube heat exchanger based on FIG. 5;
FIG. 7 is a top view of a harmonica tube heat exchanger in some embodiments of the present disclosure, wherein the flow direction of the refrigerant in each harmonica tube is illustrated;
FIG. 8 is a schematic structural diagram of a collecting tube assembly of a harmonica tube heat exchanger in some embodiments of the present disclosure, wherein the collecting tube assembly includes a first collecting tube and a second collecting tube;
FIG. 9 is a schematic structural diagram of a tail end collecting tube of a harmonica tube heat exchanger in some embodiments of the present disclosure;
FIG. 10 is a schematic structural diagram of a connector of a harmonica tube heat exchanger in some embodiments of the present disclosure; and
FIG. 11 is a block diagram of a structure of a vehicle in an illustrative embodiment of the present disclosure.

### DETAILED DESCRIPTION

It should be understood that the specific embodiments described herein are for purposes of illustration and explanation of the disclosure only and are not intended to limit the present disclosure.

In the present disclosure, unless otherwise explicitly specified and limited, the terms "upper", "lower", "left" and "right" are used generally to refer to upper, lower, left and right corresponding to the figures, and "inner" and "outer" refer to " inner and outer" relative to the contour of the corresponding component itself . In addition, the terms "first", "second", "third", "fourth", and the like are used in the present disclosure to distinguish one element from another and are not sequential or important. In addition, in the following description, when referring to the drawings, the same reference numerals in different drawings indicate the same or similar elements unless otherwise explained. The mentioned above definitions are for purposes of explanation and description of the present disclosure only and should not be construed as limiting the present disclosure.

The power battery direct cooling heat exchanger is mainly formed by welding a harmonica tube, a collecting tube assembly, a tail end collecting tube, a connector and a temperature equalizing plate in the related art. Different from liquid cooling, the refrigerant in the harmonica tube will gradually change from liquid to gas-liquid two-phase, and may eventually become gaseous. Therefore, the heat transfer performs boiling heat transfer rather than convection heat transfer in the harmonica tube. According to the characteristics of boiling heat transfer, we need the liquid refrigerant in the harmonica tube to be able to quickly nucleate and detach from the wall surface, so as to have the best heat exchange capacity. If that nucleation rate of the nuclei is too slow, or the speed of detaching from the wall surface after nucleation is too slow, or the nuclei continuously grows and even blocks the whole tube channel, the heat exchange capacity can be obviously reduced. However, the smooth inner sidewall of the harmonica tube at present has no way to make the liquid refrigerant nucleate rapidly, and once nucleated, it cannot be quickly detached from the wall surface.

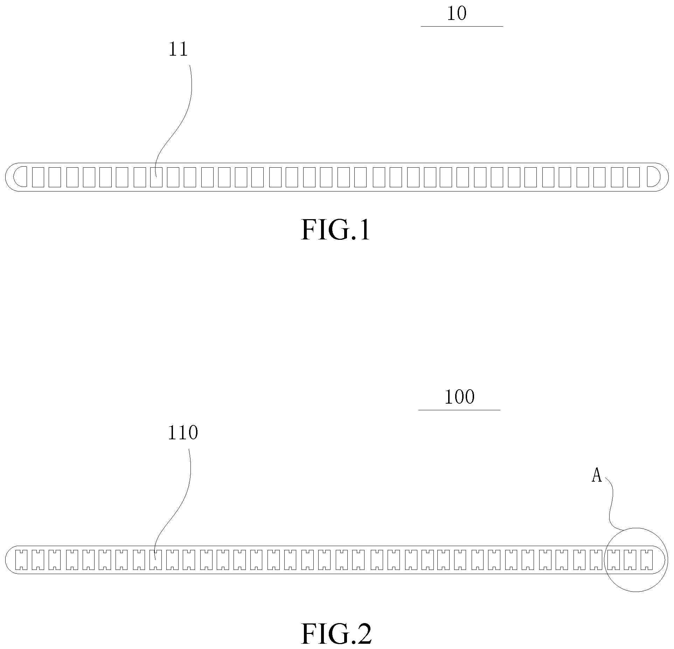

As shown in FIG. 1, in the related art, the inner sidewall of the flow channel 11 in the harmonica tube 10 is smooth, the refrigerant enters from one end and flows out from the other end, and the speed when the refrigerant contacts the wall surface in the flow channel 11 is too fast, which is unfavorable for nucleation, and after nucleation, when the fluid (refrigerant) flows inside the harmonica tube 10, a boundary layer is formed on the inner sidewall surface of the flow channel 11 of the harmonica tube 10, and the boundary layer will hinder the heat exchange of the fluid. In other words, the conventional harmonica tube 10 is likely to have slow nucleation rate of the refrigerant, and at the same time, the nuclei grows from a small nuclei to a large nuclei, or the liquid nuclei always swims on the wall surface and cannot be quickly detached from the wall surface, and the like, which will seriously affect the heat exchange capacity of the direct cooling heat exchanger, especially under the condition of high heat generation of a power battery, and it is particularly important to design a harmonica tube capable of enhancing heat transfer.

As shown in FIG. 2 to FIG. 4, in order to achieve the above object, in a first aspect of the present disclosure, a harmonica tube 100 includes a plurality of flow channels 110 which are arranged at intervals, wherein the inner sidewall of at least a portion of the flow channels 110 is provided with a protrusion 111 protruding towards near the center direction of the flow channels 110 and/or a recess 112 recessed towards the center direction away from the flow channels 110.

Through the technical scheme, that is, the harmonica tube 100 of the present disclosure, the protrusion 111 and/or the recess 112 is/are arranged on the inner sidewalls of the plurality of flow channels 110 or a portion of the flow channels110 , and the protrusion 111 and the recess 112 can be used as gasification core, causing the liquid fluid (refrigerant) can be quickly nucleated and vaporized, meanwhile, they can also break the disordered growth of large nuclei (bubbles) after nucleation, causing them to quickly detach from the wall of the flow channel 110, preventing the formation of a boundary layer on the inner sidewall surface of the flow channel by the nucleated large nuclei (bubbles), improving the heat transfer capacity of the harmonica tube 100, and meeting the heat transfer needs of power battery 600.

It should be noted that the inner sidewall of each flow channel 110 may be provided with a protrusion 111 or a recess 112, or a protrusion 111 and a recess 112at the same time, to avoid that the fluid cannot be nucleated due to the rapid flow along the inner sidewall surface of the flow channel, and to avoid forming boundary layers on the inner sidewall, and to improve the boiling heat transfer capability of the harmonica tube 100 to meet the high heat exchange requirements of the power battery 600 at present and even in the future.

It can be understood that in the plurality of flow channels 110 of the harmonica tube, each flow channel 110 is provided with a protrusion 111 and/or a recess 112, so as to maximize the heat exchange capacity of the whole harmonica tube 100; of course, the protrusion 111 and/or the recess 112 can also be arranged on the inner sidewall of part of the flow channels 110 (one flow channel 110 or more than one flow channel 110) in the plurality of flow channels 110, so as to improve the heat exchange capacity of the whole harmonica tube 100 to a certain extent. The number of the flow channels 110 provided with the protrusions 111 and/or the recesses 112 can be selected by a technician as desired.

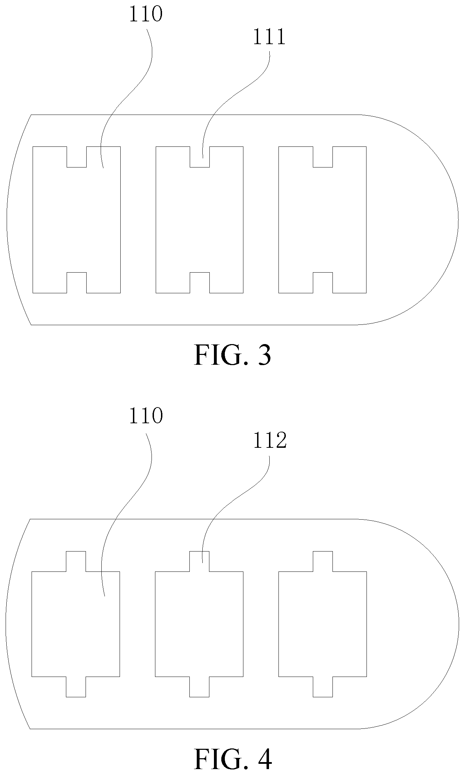

As shown in FIG. 2 and FIG. 3, when the protrusion 111 is disposed on the inner sidewall of the flow channel 110, the protrusion 111 may be configured with any suitable structure. In some embodiments of the present disclosure, the protrusion 111 may be formed on the inner sidewall of the flow channel 110, and the protrusion 111 penetrates through the flow channel 110 along the length direction of the flow channel 110.The protrusion 111 may extend along the length direction of the harmonica tube 100 and extend from one end of the flow channel 110 of the harmonica tube 100 to the other end. When the refrigerant is overheated and flows in the flow channel 110, the refrigerant can be nucleated by using the protrusion 111 as a gasification core to form bubbles and flow along the flow channel 110. Meanwhile, the protrusions 111 can also break the bubbles growing in disorder, so as to prevent the formation of a boundary layer on the inner sidewall surface of the flow channel 110 to influence the heat exchange.

In some embodiments, the protrusions111 may also be spirally arranged along the length direction of the flow channel 110, wherein the protrusion 111 may have a protruding structure continuous in the length direction of the flow channel 110 and protruding towards the center direction of the flow channel 110, that is, the protrusion 111 may extend from one end of the flow channel 110 to the other end; of course, the protruding structure can also be configured as a plurality of sub protrusions arranged at intervals along the spiral direction, and also can play the role of improving the heat exchange effect. The spirally arranged protrusion 111 can be used as a gasification core under the condition that the refrigerant is overheated, which is beneficial to the nucleation of bubbles, and simultaneously prevents the disorderly growing nucleus from growing and adhering to the wall surface to form a boundary layer to influence heat exchange.

In some embodiments, the number of the protrusions 111 is plural, and the protrusions 111 are arranged at intervals along the length direction of the flow channel 110. For example, the protrusions 111 can be configured as arc structures, triangular structures, rectangular structures or other polygonal structures, and are arranged at intervals along the length direction of the flow channel 110, that is, a plurality of disconnected protrusions 111 are arranged along the length direction, causing the nucleation of the refrigerant can be satisfied, the boundary layer can be broken, and the boiling heat exchange capacity can be improved.

As shown in FIG. 4, when the recess 112 is provided on the inner sidewall of the flow channel 110, the recess 112 may be configured with any suitable structure. In some embodiments of the present disclosure, the recess 112 is formed on the inner sidewall of the flow channel 110 and penetrates through the flow channel 110 along the length direction of the flow channel 110, wherein the recess 112 may extend along the length direction of the harmonica tube 100 and extend from one end to the other end of the flow channel 110 of the harmonica tube 100. When the refrigerant is overheated and flows in the flow channel 110, the refrigerant can be nucleated by using the recess 112 as a gasification core to form bubbles and flow along the flow channel 110. Meanwhile, the recess can also break the bubbles growing in disorder, so as to prevent the formation of a boundary layer on the inner sidewall surface of the flow channel 110 to influence the heat exchange.

In some embodiments, the recesses 112 are spirally arranged along the length direction of the flow channel 110. The recess 112 may have a recess structure that is continuous in the length direction of the flow channel 110 and recessed toward the center direction of the flow channel 110, that is, the recess structure may extend from one end of the flow channel 110 to the other end; of course, the recess structure can also be configured as a plurality of sub-grooves arranged at intervals along the spiral direction, and also can play the role of improving the heat exchange effect.

In some embodiments, the number of the recesses 112 may be plural, and the recesses 112 are arranged at intervals along the length direction of the flow channel 110. For example, the recesses 112 can be configured as arc grooves, triangular grooves, rectangular grooves or other polygonal grooves, and are arranged at intervals along the length direction of the flow channel 110, that is, a plurality of disconnected recesses 112 are arranged along the length direction, causing the nucleation of the refrigerant can be satisfied, the boundary layer can be broken, and the boiling heat exchange capacity can be improved.

In other embodiments, the number of the protrusions 111 may be plural, and the protrusions 111 extend along the length direction of the flow channel 110 and are arranged at intervals along the circumferential direction of the flow channel 110. The plurality of protrusions 111 can be arranged at intervals along the length direction of the flow channel 110, and the plurality of protrusions 111 can be arranged at intervals along the circumferential direction of the flow channel 110. In the length direction of the flow channel 110, the plurality of protrusions 111 can be arranged on a plurality of straight lines or alternatively arranged. When the refrigerant is overheated and flows in the flow channel 110, the plurality of protrusions 111 arranged in the length direction and the circumferential direction can be used as gasification cores for nucleation to form bubbles and flow along the flow channel 110. Meanwhile, the plurality of protrusions 111 can more effectively break the bubbles growing in disorder, so as to prevent the bubbles from forming boundary layers on the inner sidewall surface of the flow channel 110 and affecting heat exchange.

Also, in other embodiments, the number of the recesses 112 may be plural, and the recesses 112 extend along the length direction of the flow channel 110 and are arranged at intervals along the circumferential direction of the flow channel 110. The plurality of recesses112 may be arranged at intervals along the length direction of the flow channel 110, and the plurality of recesses 112 may also be arranged at intervals along the circumferential direction of the flow channel 110. In the longitudinal direction of the flow channel 110, the plurality of recesses 112 may be arranged on a plurality of straight lines or alternatively arranged. The plurality of recesses 112 extend along the length direction and are arranged at intervals along the circumferential direction, causing the gasification core is increased and nucleated, the boundary layer can be effectively broken, and the heat exchange effect is improved.

As shown in FIG. 3, in some embodiments, the number of the protrusions 111 is two, and the two protrusions 111 are provided on two opposite sides of the flow channel 110. Wherein the protrusions 111 are configured as a boss, a downward boss is arranged at the middle part of the upper sidewall of the flow channel 110, and an upward boss is arranged at the middle part of the lower sidewall of the flow channel 110, that is the two bosses are oppositely arranged. The cross section of the flow channel 110 forms an approximate H shape, the use of the two bosses can improve the nucleation of the fluid (refrigerant), and also can reduce the formation of the fluid boundary layer, thereby reducing the thermal resistance of the fluid boundary layer, enhancing the heat transfer and increasing the heat exchange capacity of the fluid. The flow channel 110 of the whole harmonica tube 100 can adopt the above-mentioned H- shaped cross-section to enhance the heat transfer of the whole harmonica tube 100.

In some embodiments, in the plurality of flow channels 110 of the harmonica tube 100, the protrusion 111 may be disposed in one portion of the flow channel 110, and the recess 112 may be disposed in another portion of the flow channel 110, or the protrusion 111 and the recess 112 may be disposed in one portion of the flow channel 110, and the protrusion 111 or the recess 112 may be disposed in the other portion of the flow channel 110. That is, various permutations and combinations of various forms in the above scheme can be performed, which should be within the scope of protection of the present disclosure, and will not be described here again.

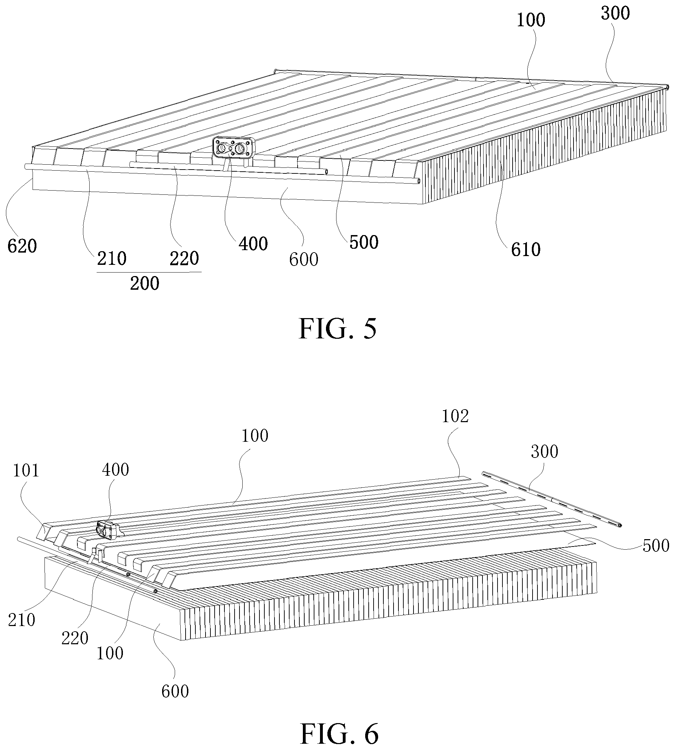

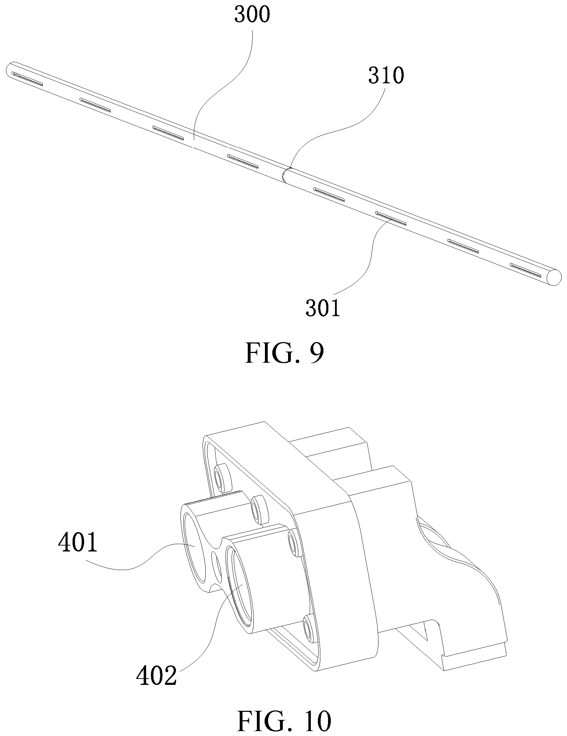

As shown in FIGS. 5 to 10, in a second aspect of the present disclosure, a harmonica tube heat exchanger 1001 is provided, which includes a collecting tube assembly 200, a tail end collecting tube 300, a connector 400, a temperature equalizing plate 500, and a plurality of the harmonica tubes 100. The collecting tube assembly 200 includes a first collecting tube 210 and a second collecting tube 220; the inlet 401 of the connector 400 is in communication with the first ends 101 of one portion of the plurality of harmonica tubes 100 through the first collecting tube 210, the outlets 402 of the connector 400 are in communication with the first ends 101 of another portion of the harmonica tubes 100 through the second collecting tubes 220, and the second ends 102 of the harmonica tubes 100 are respectively in communication with the tail end collecting tubes 300.A plurality of harmonica tubes 100 are fixed on the temperature equalizing plate 500.

The harmonica tube 100 with enhanced heat transfer mentioned above is applied to the heat exchanger of the battery pack, as shown in FIG. 5, forming a harmonica tube heat exchanger 1001, wherein the harmonica tube heat exchanger 1001 includes a connector 400, a collecting tube assembly 200, a tail end collecting tube 300, a temperature equalizing plate 500, and the harmonica tube 100 mentioned above, and is connected by welding. Two through holes inside the connector 400 is provided as an inlet 401 and an outlet 402 of the entire heat exchanger. The first collecting tube 210 and the second collecting tube 220 forming the collecting tube assembly 200, and the tail end collecting tube 300are all made of round aluminum tubes, and a plurality of holes corresponding to the width of the harmonica tube 100 are reserved on the side surfaces of the round aluminum tubes, and flow channels are also formed in the round aluminum tubes. The connector 400, the first collecting tube 210, the second collecting tube 220, the harmonica tube 100 and the tail end collecting tube 300 are mutually embedded and welded, and the through holes in the components are in communication with each other to form a flow channel in the heat exchanger. In order to increase the heat exchange area of the entire heat exchanger, the temperature equalizing plate 500 is welded to the plurality of harmonica tubes 100.

It should be noted that the inlet 401 of the connector 400 can be in communication with the middle part of the first collecting tube 210 through the first connecting tube 230, and the outlet 402 of the connector 400 can be in communication with the middle part of the second collecting tube 220 through the second connecting tube 240, so as to improve the distribution uniformity.

The harmonica tube heat exchanger 1001 is connected to the air conditioning system through a connector 400 to cool or heat a battery (e.g., power battery 600) in a battery pack to maintain the battery at a suitable operating temperature.

When the battery temperature is relatively high and needs to be cooled down, the air conditioning system receives the cooling demand of the battery system and distributes the refrigerant in the air conditioning system to the harmonica tube heat exchanger 1001, the refrigerant flows from the inlet 401 of the connector 400 to the first collecting tube 210, and then to a portion of the harmonica tubes 100, in this portion of the harmonica tube 100, it flows to the tail end collecting tube 300, then flows from other harmonica tubes 100 to the second collecting tube 220, and finally flows out from the outlet 402 of connector 400. At this time, the temperature of the battery is conducted to the temperature equalizing plate 500, and the temperature equalizing plate 500 conducts heat to the harmonica tube 100. Because the harmonica tube 100 is a harmonica tube 100 enhanced heat transfer, the heat exchange efficiency is higher, causing compared with the conventional harmonica tube 100, the harmonica tube 100 takes more heat from the battery, the cooling is faster, and the harmonica tube 100 is more beneficial to the operation of the battery.

As shown in FIG. 5 and FIG. 6, the power battery 600 adopts a long battery transverse arrangement scheme, two ends of the power battery 600 are respectively a battery positive pole 610 and a battery negative pole 620, and the battery positive pole 610 of the power battery 600 faces the direction of the battery negative pole 620 and is perpendicular to the length direction of the harmonica tube 100 of the harmonica heat exchanger. In a high-temperature environment, when the power battery 600 is charged or operated, the temperature at both ends of the positive and negative poles of the power battery 600 is higher than the temperature at the middle. Therefore, when the power battery 600 is cooled, the first consideration is the cooling of the two ends of the power battery 600. Similarly, in a severe cold environment, when the power battery 600 is charged or operated, the temperature at both ends of the positive and negative poles of the power battery 600 is higher than the temperature in the middle. Therefore, when the power battery 600 is heated, the heating in the middle of the power battery 600 should be considered first.

In some embodiments, at least the outermost two harmonica tubes 100 among the plurality of harmonica tubes 100 communicate with the first collecting tube 210 in a direction perpendicular to the extension direction of the harmonica tubes 100. Meanwhile, among the two harmonica tubes 100 positioned on the outermost side, one corresponds to the battery positive pole 610 at one end of the power battery 600, the other corresponds to the battery negative pole 620 at the opposite end of the power battery 600, and the other harmonica tubes 100 correspond to the middle portion of the power battery 600. It can be understood that, perpendicular to the extension direction of the harmonica tubes, it can be consistent with the arrangement direction of the plurality of the harmonica tubes. When the power battery 600 needs to be cooled, the connector 400 of the heat exchanger is connected with the air conditioner, that is, the refrigerant in the air conditioning system enters from the inlet 401 of the connector 400 and flows to the first collecting tube 210, and then flows separately from the first collecting tube 210 to he harmonica tubes 100 which are on the outermost left and right side or near the outer side, then flows back into the second collecting tube 220 through the tail end collecting tube 300 and other middle harmonica tubes 100, and then flows out into the air conditioning system from the outlet 402 of the connector 400. The heat exchanger is connected in parallel with the air conditioning system of the whole vehicle through the connector 400, and when the power battery system needs to be cooled, the air conditioning controller controls the refrigerant to flow to the heat exchanger, causing the effect of cooling the power battery 600 is achieved.

Similarly, when the temperature of the power battery 600 is low and needs to be heated, the refrigerant enters through the outlet 402 of the connector 400, flows through the second collecting tube 220, the plurality of harmonica tubes 100 in the middle, and back into the first collecting tube 210 through the tail end collecting tube 300 and the outermost harmonica tube 100, and then flows out into the air conditioning system through the inlet 401 of the connector 400, causing the power electric heating can be realized.

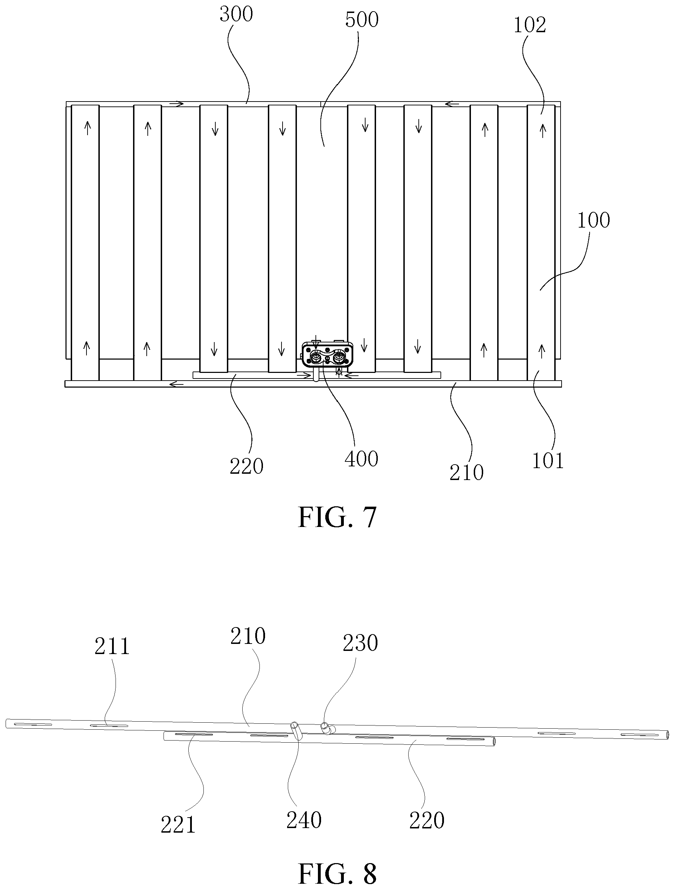

As shown in FIG. 7, in some embodiments, the number of harmonica tubes can be eight. In the direction perpendicular to the extension direction of the harmonica tubes 100, the first ends 101 of the innermost four harmonica tubes 100 are respectively in communication with the second collecting tube 220, and the first ends 101 of the two harmonica tubes 100 positioned on both sides of the four harmonica tubes 100 are respectively in communication with the first collecting tube 210.

In the direction perpendicular to the extension direction of the harmonica tubes 100, that is, the direction in which the battery positive pole 610 of the power battery 600 faces the battery negative pole 620, the innermost four harmonica tubes 100 are respectively in communication with the second collecting tube 220, and the other four harmonica tubes 100 are respectively in communication with the first collecting tube 210. The first ends 101 of the two harmonica tubes 100 positioned at the leftmost side and the two harmonica tubes 100 positioned at the rightmost side are respectively in communication with the first collecting tube 210, the first ends 101 of the four harmonica tubes 100 positioned at the middle position are respectively in communication with the second collecting tube 220, and the second ends 102 of the eight harmonica tubes 100 are respectively in communication with the tail end collecting tubes 300. During the cooling process, the refrigerant of the air conditioning system enters from the inlet 401 of the connector 400 and flows to the two harmonica tubes 100 on the left side and the two harmonica tubes 100 on the right side respectively through the first collecting tube 210. The refrigerant merges into the tail end collecting tube 300 at the second ends 102 of the four harmonica tubes 100, flows into the second collecting tube 220 through the four harmonica tubes 100 which are in communication with the tail end collecting tube 300 and positioned in the middle, and flows back to the air conditioning system through the outlet 402 of the connector 400 to achieve circulation. In the flowing process, the refrigerant firstly enters the two harmonica tubes 100 on the leftmost side and the two harmonica tubes 100 on the rightmost side to cool the two ends of the power battery 600 with higher temperature, causing the two ends of the power battery 600 with higher temperature can reach the proper temperature range as soon as possible, and then the four harmonica tubes 100 positioned in the middle position cool the middle position of the battery, causing the cooling requirements of different areas of the power battery 600 can be met, and the temperature difference can be avoided. In the heating process, the flow direction is just opposite, that is, the refrigerant enters through the outlet 402 of the connector 400 and flows out from the inlet 401 of the connector 400, causing the middle part of the power battery 600 with relatively low temperature can be preferentially heated, and then the two end areas with relatively higher temperature can be heated, causing the temperature requirement of the power battery 600 can be met as soon as possible.

The harmonica tube 100 may be connected to the first collecting tube 210, the second collecting tube 220 and the tail end collecting tube 300 in any suitable manner, as shown in FIG. 8, FIG. 9 and FIG. 10,in some embodiments of the present disclosure, the first collecting tube 210 is provided with a plurality of first strip-shaped holes 211 extending along the length direction thereof, and the first end 101 of the harmonica tube 100 is fixedly connected to the first strip-shaped holes 211, causing the plurality of flow channels 110 of the harmonica tube 100 can be in communication with the first collecting tube 210. The inner side of the first collecting tube 210 is provided with a plurality of first strip-shaped holes 211 corresponding to the width of the first end 101 of the harmonica tube 100 to be connected, and the harmonica tube 100 is inserted into the first strip-shaped holes 211 and connected to the first strip-shaped holes 211 by welding. It should be noted that the first end 101 of the harmonica tube 100 may be formed with a bent portion to save space along the length direction of the harmonica tube 100. The bent portion is bent downward and inserted into the first strip-shaped holes 211 for a certain length, and then the harmonica tube 100 and the first collecting tube 210 are connected by brazing, thereby avoiding blocking the flow channel 110 of the harmonica tube 100 during the welding process.

In some embodiments, the second collecting tube 220 is provided with a plurality of second strip-shaped holes 221 extending along the length direction thereof, and the first end 101 of the harmonica tube 100 is fixedly connected to the second strip-shaped holes 221, causing the plurality of flow channels 110 of the harmonica tube 100 can be in communication with the second collecting tube 220. The inner side of the second collecting tube 220 is provided with a plurality of second strip-shaped holes 221 corresponding to the width of the first end 101 of the harmonica tube 100 to be connected, and the harmonica tube 100 is inserted into the second strip-shaped holes 221 and connected to the second strip-shaped holes 221 by welding. Similarly, the first end 101 of the harmonica tube 100 may be formed with a bent portion to save space along the length direction of the harmonica tube 100. The bent portion is bent downward and inserted into the second strip-shaped holes 221 for a certain length, and then the harmonica tube 100 is connected to the second collecting tube 220 by brazing, thereby avoiding blocking the flow channel 110 of the harmonica tube 100 during the welding process.

In some embodiments, the tail end collecting tube 300 is provided with a plurality of third strip-shaped holes 301 extending along the length direction thereof, and the second end 102 of the harmonica tube 100 is fixedly connected to the third strip-shaped holes 301, causing the plurality of flow channels 110 of the harmonica tube 100 can be in communication with the tail end collecting tube 300. A plurality of third strip-shaped holes 301 corresponding to the width of the second end 102 of the harmonica tube 100 to be connected are formed on the inner side of the tail end collecting tube 300, and the harmonica tube 100 is inserted into the third strip-shaped hole 301 and connected to the third strip-shaped hole 301 by welding. The second end 102 of the harmonica tube 100 is a straight section, causing the second end 102 of the harmonica tube 100 can be directly disposed at the third strip-shaped holes 301, and then the harmonica tube 100 and the tail end collecting tube 300 are connected by brazing, causing the problem of blocking the flow channel 110 of the second end 102 of the harmonica tube 100 is not required, and the assembly efficiency can be improved.

In some embodiments, the tail end collecting tube 300 may also be a round aluminum tube, both ends of the round aluminum tube are sealed, and the second ends 102 of the plurality of harmonica tubes 100 are connected to the round aluminum tube at intervals, causing the refrigerant can flow in part of the harmonica tubes 100and flow out from other parts of the harmonica tubes 100. It should be noted that, in order to achieve the above-mentioned effect of improving the internal flow stability, the sealing member 310 for blocking the internal channel can be arranged at the middle position of the round aluminum tube to divide the round tube into two sections, wherein the four harmonica tubes 100 on the left side are in communication with one section, and the four harmonica tubes 100 on the right side are in communication with the other section, causing the purpose of stabilizing the flow rate can also be realized.

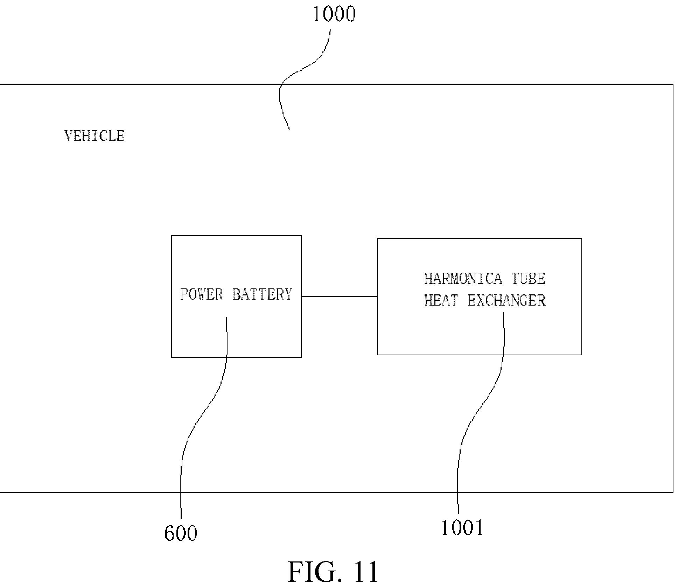

As shown in FIG. 11, in the third aspect of the present disclosure, a vehicle 1000 is provided, which includes a power battery 600. The vehicle 1000 further includes the harmonica tube heat exchanger 1001 described above. Since the harmonica heat exchanger 1001 adopts a structural design in which the flow channel 110 is provided with the protrusion 111 and/or the recess 112, the power battery 600 of the vehicle 1000 can be better cooled or heated.

In summary, in the harmonica tube 100, the harmonica tube heat exchanger 1001 and the vehicle 1000 of the present disclosure, it is considered that boiling heat transfer, particularly forced boiling, occupies a dominant position in the harmonica tube heat exchanger 1001. Therefore, according to the characteristics of forced boiling and the characteristics of liquid nucleation during boiling, the structural design for enhancing heat transfer is carried out by arranging the protrusion 111 and/or the recess 112 on the inner sidewall of the whole flow channel 110 or part of the flow channel 110 of the harmonica tube 100, causing the liquid nucleation speed can be increased, and meanwhile, the nuclei can be restricted to be constantly enlarged to form a film to hinder heat transfer, the heat exchange capability of the harmonica tube 100 is improved, and the heat exchange requirement of the power battery 600 is met.

The preferred embodiments of the present disclosure have been described in detail above with reference to the drawings, but the present disclosure is not limited to the specific details in the above embodiments. Within the scope of the technical concept of the present disclosure, various simple modifications can be made to the technical solution of the present disclosure, which all belong to the protection scope of the present disclosure.

It should also be noted that the various specific technical features described in the above detailed embodiments may be combined in any proper manner without contradiction. in order to avoid unnecessary repetition, the various possible combinations are not otherwise described in the present disclosure.

In addition, the various embodiments of the present disclosure may be combined in any manner as long as they do not depart from the spirit of the present disclosure, which should also be regarded as the disclosure of the present disclosure. Specifically, image information at a same angle as a rearview mirror may be captured by using left and right cameras respectively installed on the rearview mirror of the vehicle, and is processed to determine whether an obstacle or pedestrian is provided within a range. Alternatively, rear image information is collected by using a millimeter wave radar installed in the rear of the vehicle, to determine, based on the rear image information, whether an oncoming vehicle is provided behind the vehicle. In addition, image information on both sides of the vehicle is collected by using an ultrasonic radar installed on a vehicle body.

## Claims

1. A harmonica tube, comprising a plurality of flow channels (110) arranged at intervals, the inner sidewall of at least a portion of the flow channels (110) being provided with a protrusion (111) protruding towards near the central direction of the flow channel (110) and/or provided with a recess (112) recessing towards the central direction away from the flow channel (110).

2. The harmonica tube according to claim 1, wherein the inner sidewall of the flow channel (110) is provided with the protrusion (111), the protrusion (111) penetrates the flow channel (110) along the length direction of the flow channel (110);
or the protrusion (111) is spirally arranged along the length direction of the flow channel (110);
or, the number of the protrusions (111) is plural, and the plurality of protrusions (111) are arranged at intervals along the length direction of the flow channel (110)..

3. The harmonica tube according to claim 1, wherein the inner sidewall of the flow channel (110) is provided with the recess (112), the recess (112) penetrates the flow channel (110) along the length direction of the flow channel (110).
or the recess (112) is spirally arranged along the length direction of the flow channel (110);
or, the number of the recesses (112) is plural, and the plurality of recesses (112) are arranged at intervals along the length direction of the flow channel (110).

4. The harmonica tube according to claim 1, wherein the number of the protrusions (111) is plural, and the plurality of protrusions (111) extend along the length direction of the flow channel (110) and are arranged at intervals along the circumferential direction of the flow channel (110).
or, the number of the recesses (112) is plural, and the plurality of recesses (112) extend along the length direction of the flow channel (110) and are arranged at intervals along the circumferential direction of the flow channel (110).

5. The harmonica tube according to claim 4, wherein the number of the protrusions (111) is two, and the two protrusions (111) are arranged on two opposite sides of the flow channel (110).

6. A harmonica tube heat exchanger, comprising a collecting tube assembly (200), a tail end collecting tube (300), a connector (400), a temperature equalizing plate (500), and a plurality of harmonica tubes (100) according to any one of claims 1 to 5 being implemented;
wherein the collecting tube assembly (200) comprises a first collecting tube (210) and a second collecting tube (220); an inlet (401) of the connector (400) is in communication with a first end (101) of part of the harmonica tubes (100) in a plurality of harmonica tubes (100) through the first collecting tube (210), an outlet (402) of the connector (400) is in communication with the first end (101) of another part of the harmonica tubes (100) through the second collecting tube (220), and second ends (102) of the harmonica tubes (100) are respectively in communication with the tail collecting tube (300);
a plurality of harmonica tubes (100) are fixedly arranged on the temperature equalizing plate (500).

7. The harmonica tube heat exchanger according to claim 6, wherein in the direction perpendicular to the extension direction of the harmonica tubes (100), at least two of the harmonica tubes (100) positioned on the outermost side of the plurality of harmonica tubes (100) are in communication with the first collecting tube (210) .

8. The harmonica tube heat exchanger according to claim 7, wherein the number of the harmonica tubes (100) is eight, in the direction perpendicular to the extension direction of the harmonica tubes (100), the first ends (101) of the innermost four harmonica tubes (100) are respectively in communication with the second collecting tube (220), and the first ends (101) of the two harmonica tubes (100) positioned on both sides of the four harmonica tubes (100) are respectively in communication with the first collecting tube (210).

9. The harmonica tube heat exchanger according to any one of claims 6 to 8,whereinthe first collecting tube (210) is provided with a plurality of first strip-shaped holes (211) extending along the length direction thereof, and the first end (101) of the harmonica tube (100) is fixedly connected to the first strip-shaped hole (211), causing a plurality of flow channels (110) of the harmonica tube (100) can be in communication with the first collecting tube (210);
and/or the second collecting tube (220) is provided with a plurality of second strip-shaped holes (221) extending along the length direction of the second collecting tube (220), and the first end (101) of the harmonica tube (100) is fixedly connected with the second strip-shaped holes (221) causing a plurality of flow channels (110) of the harmonica tube (100) can be in communication with the second collecting tube (220);
and/or the tail end collecting tube (300) is provided with a plurality of third strip-shaped holes (301) extending along the length direction of the tail end collecting tube (300), and the second end (102) of the harmonica tube (100) is fixedly connected with the third strip-shaped holes (301), causing a plurality of flow channels (110) of the harmonica tube (100) can be in communication with the tail end collecting tube (300).

10. A vehicle(1000), comprising a power battery (600), the vehicle further comprising the harmonica tube heat exchanger according to any one of claims 6 to 9.
